# EUROPEAN PATENT SPECIFICATION

(11) **EP 0 700 333 B1**
(45) Date of publication and mention of the grant of the patent: **22.01.1997**
(21) Application number: 94918779.3
(22) Date of filing: 24.05.1994
(51) Int. Cl.: B29C 51/12, B29C 49/20

(54) **A METHOD OF PRODUCING BOTTLE OR TUBE-LIKE, CAPPED PACKAGING CONTAINERS FROM A POLYMER MATERIAL**
VERFAHREN ZUM HERSTELLEN VON FLASCHENARTIGEN ODER SCHLAUCHARTIGEN VERPACKUNGSBEHÄLTERN MIT EINER KAPPE
PROCEDE DE PRODUCTION, A PARTIR D'UN MATERIAU POLYMERE, DE RECIPIENTS D'EMBALLAGE ANALOGUES A UNE BOUTEILLE OU A UN TUBE ET FERMES PAR UN BOUCHON

(30) Priority: 26.05.1993 SE 9301788
(43) Date of publication of application: 13.03.1996
(73) Proprietor: Tetra Laval Holdings & Finance SA, 1009 Pully (CH)
(72) Inventor: BRUHN, Krister, D-6104 Seeheim-Jugenheim (DE)
(74) Representative: Müller, Hans-Jürgen, Dipl.-Ing.
(86) International application number: EP9401668
(87) International publication number: WO9427806

(56) References cited:
- EP-A- 0 595 158
- CH-A- 312 211
- FR-A- 2 317 079
- GB-A- 2 191 730

## Description

The invention relates to a method of producing bottles or tube-like capped packaging containers from polymer material formable in the heated state according to the preamble of claim 1.

Furthermore, the invention refers to hollow bodies and packaging containers produced according to this method.

FR-A-2 317 079 describes a method of such type according to which a cylindrical cap is inserted into the lower part of a mould or hollow cavity. Then hot plastic material is filled into the cavity in order to cover the inside of the cap and the inner walls of the cavity. Injection moulding is used to form such hollow body. Furthermore, a heated mandrel is brought into contact with the central part of the sheet forming the hollow body in order to press it against the central portion of the cap thereby connecting both elements. This hollow body can be filled with liquid from the opening of the hollow body whereafter this opening is closed by thermowelding against a plastic bottom.

CH-A-312 211 describes a method for producing tubes which are prepared by connecting a conical part with a cap comprising threads on the outside. Because of the conical form of the hollow body it is possible to telescopically stack one in another before filling and closing.

Furthermore, GB-A-2 191 730 describes the forming of a tube by connecting a cylindrical body with a circular plate and by deforming the closed end of the tube by means of a mandrel and a vacuum source as well as by air pressure in order to deform the bottom of the hollow body into different forms comprising e.g. outer threads.

Furthermore, it is known to produce bottles by blowing and by vacuum drawing a plastic film.

It is an object of the present invention to facilitate the producing of complete bottle-like containers with a controlled wall thickness and in particular for producing mutually stackable or nestable hollow bodies or parisons which on forming of the hollow bodies are provided with a cap and subsequently - after transport to a filling station - progressively filling the separated hollow bodies with their intended contents and thereafter applying a suitable bottom portion.

### SOLUTION

The solution to this problem is to provide one or more deep-drawing cavities whose walls are provided with apertures or gaps through which the air within the cavity can be evacuated. The novel and characterizing features of the present invention will be apparent from the features of the appended claims.

### BRIEF DESCRIPTION OF THE ACCOMPANYING DRAWINGS

One preferred embodiment of the present invention will now be described in greater detail hereinbelow, with particular reference to the accompanying schematic Drawings. In the accompanying Drawings:
Figs. 1A-D show how production of a hollow body takes place;
Fig. 2 shows how the hollow bodies can be stacked or nested in one another;
Figs. 3A and B show how the hollow bodies are filled and sealed; and
Fig. 4 finally shows an illustration of the finished, bottle-like or tube-like packaging container.

### DESCRIPTION OF PREFERRED EMBODIMENT

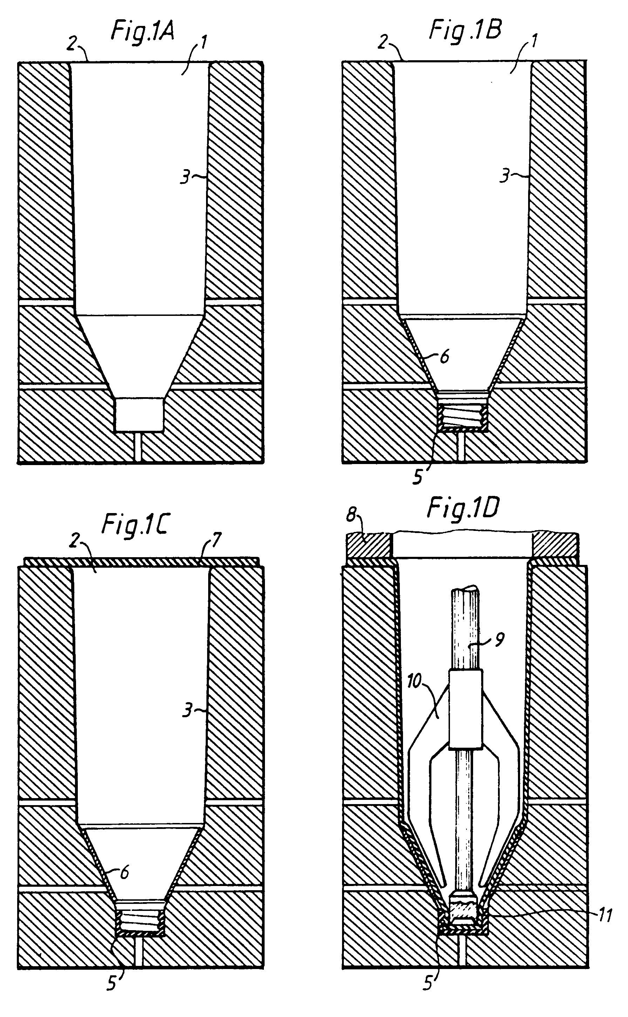

The apparatus for producing the bottle-like or tube-like packaging containers according to Fig. 1 consists of a forming cavity 1 shown in Fig. 1 A and whose cross sectional area progressively reduces from the aperture 2 of the forming cavity 1 to its innermost region. The walls 3 of the forming cavity 1 display holes or slots which can be placed in communication with a vacuum source, or at least be in communication with the ambient atmosphere. The production of the bottle or tube-like hollow body 4 is commenced in that a prefabricated cap 5 preferably of plastic material and similarly provided with through holes or slots is located in a per se known manner in the innermost region of the forming cavity 1, whereafter it is possible, in the manner intimated, to dispose a conical bandolier 6 of, for instance, paper or plastic and provided with instructional or advertising text at a suitable place within the cavity 1 against its wall 3. In the next stage, a sheet 7 of thermoplastic material, for example polyethylene, polypropylene or similar polymer material, is applied over the open end of the cavity 1. The thus applied polymer sheet 7 may, on application, be heated or be subsequently heated to the plasticization temperature, whereafter it is fixedly retained by means of clamping devices 8 along the aperture 2 of the cavity 1.

The above-disclosed polymer sheet 7 heated to plasticity is urged into the cavity 1 with the aid of a mandrel 9 whose mandrel rod displays flip-out or told-out blades or vanes 10 which are so arranged that they are progressively folded out by degrees as the mandrel 9 is urged into the forming cavity 1 under expansion of the plastic polymer layer. In order to enable the plastic polymer material, under stretching and attenuation, to be applied against the walls 3 of the forming cavity 1, it is necessary that the air between the stretched plastic material and the walls 3 of the forming cavity 1 can be evacuated and, to facilitate the forming operation, this space is placed in communication with a vacuum source, the plastic polymer material being, as a result of the pressure difference between its interior and exterior portions, brought into abutment against the inner walls 3 of the forming cavity 1. This forming may actively be facilitated at the same time as material thickness distribution can be controlled in that the blades or vanes 10 disposed on the mandrel 9 are folded out and assist in forcing the stretched plastic layer against the walls 3 of the cavity 1. If required, the forming effect may be further amplified and the process speeded-up by connecting that portion of the forming cavity 1 in which the movable mandrel 9 is located to a source of compressed air, the stretched plastic film being actively "blown" or urged against the walls 3 of the cavity 1. The folding out of the above-mentioned blades or vanes 10 continues progressively during insertion of the mandrel 9, and can be guided by a cam surface. The final position is achieved when the mandrel 9 with its forward portion 11 presses parts of the plastically deformed plastic material against the inside of the prefabricated cap 5 inserted in the innermost region of the cavity 1. In order that the portion of the plastic film inserted into the cap 5 accurately adheres to the inner region of the cap 5 (which preferably displays screw threads), the cap 5 should be provided with holes or slots and the outer region of the cap 5 should be connected to a vacuum source so that the warm and formable plastic film may be actively brought into contact against the inner region of the cap 5.

The cap 5, which may preferably be a plastic cap produced in a suitable manner such as injection moulding, consists, in the embodiment described here, of a circular frontal plate from whose periphery departs an annular or tubular portion. The inner region of the above tubular or annular portion displays, for example, the above-mentioned screw threads, while the circular frontal portion displays a circular projecting, sharp edge. When the forward portion of the mandrel 9 urges parts of the stretched plastic film against the inside of the circular disk of the cap 5 in the region inside the above-mentioned projecting circular, per se closed edge, the above-mentioned portion of the plastic material can be sealed to the cap 5 in the region inside the sharp annular edge and be urged against the sharp edge so that the material is wholly or partly breached or weakened. The sealing of the stretched plastic layer in the region inside the annular edge against the inside of the cap 5 can be effected either with the aid of heat and pressure or with the aid of ultrasonic sound, the principle being that a good communication is established between the stretched plastic layer over the forward edge of the mandrel 9 and the inside of the cap 5, and that the stretched plastic film is, in the region outside the above-mentioned seal, effectively weakened or breached by means of the previously mentioned sharp edge.

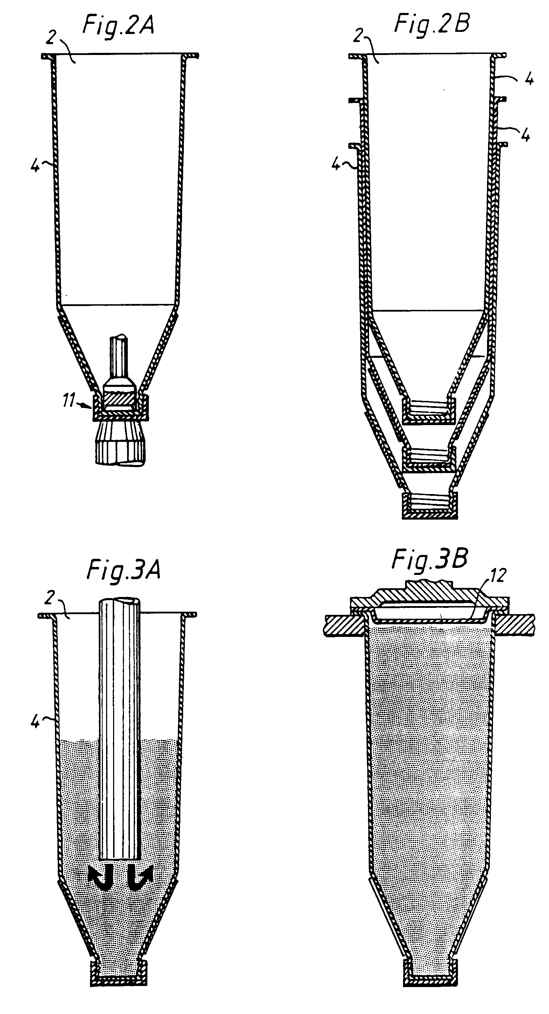

After the forming of the hollow body 4 by stretching of the polymer sheet 7 heated to plasticity, the hollow body 4 is withdrawn with the applied cap 5 out of the forming cavity/the mould 1 in which the hollow body 4 has been formed and, as is apparent from Fig. 2, a plurality of hollow bodies may be stacked or nested in one another for facilitating transport and handling. As is apparent from Fig. 3, the bottle-like packaging containers 4 are filled through their open bottom region 2 and, as is intimated in Fig. 3 B, this bottom opening 2 is closed and sealed with the aid of a prefabricated bottom plate 12 which, in a suitable manner such as by heat-sealing, is applied against the bottom edge line of the hollow body 4.

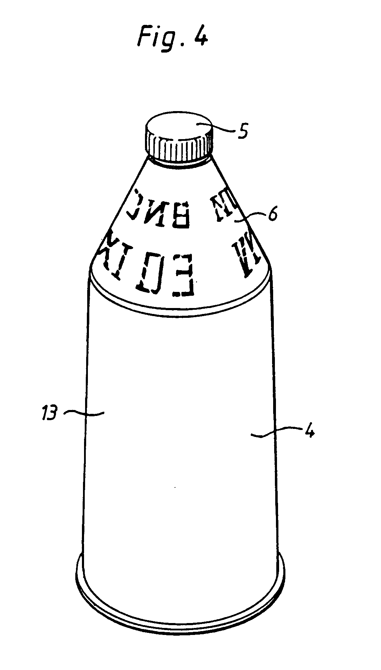

The finished, bottle-like package 13 is shown in Fig. 4.

On opening of the package 13 in connection with making available of the contents enclosed therein, the cap 5 is unscrewed, in which event a certain initial resistance is met at the start of the opening operation, since it is necessary on twisting of the cap 5 simultaneously to break off the portion of the plastic material drawn into the cap 5 and weakened by the annular sharp edge. This situation, that the cap 5 must initially be broken free in this manner, also constitutes a guarantee for the consumer that the package has not previously been opened. When the portion of the plastic film sealed against the inside of the cap 5 has been separated from the rest of the deep-drawn or vacuum-formed plastic portion, the cap 5 may be unscrewed and an opening hole or mouth is exposed through which the contents of the package may be dispensed.

As was mentioned by way of introduction, the package may also be designed as a thin-walled tube which is preferably filled with viscous or pasty contents, for example mustard, caviar, tomato purée etc. Such a tube may traditionally be provided with a screw or snap closure of the prefabricated type, and the cap itself may advantageously be provided with a tipped tool which, after removal of the cap, may be employed for mechanically penetrating the packaging wall in the region of the seal proper. In this latter described case, the inner portion of the cap must not, thus, be welded together with the deep-drawn hollow body.

It has proved that, using the method according to the present invention, it is possible in a rational and economical manner to produce bottle-like packaging containers which are provided with a reclosable opening. By employing the method according to the present invention, the package may be made very thin-walled and thereby cheap to produce.

The present invention should not be considered as restricted to that described above and shown on the Drawings, many modifications being conceivable without departing from the spirit and scope of the appended Claims.

## Claims

1. Method of producing bottles or tube-like, capped packaging containers (13) from a polymer material formable in the heated state,
wherein a prefabricated cap (5) is placed into a conical mould or forming cavity (1) and
wherein a polymer sheet (7) is deformed in said cavity (1) on the side walls (3) thereof and is fixed against the inside of said cap (5) thereby forming a hollow body (4),
**characterized in that**
said sheet (7) is applied over the aperture (2) of the cavity (1) and is fixedly retained around said aperture (2) by clamping devices (8), wherein said cavity (1) comprises a progressively reducing cross-section from its aperture (2) towards its innermost region,
whereafter said sheet (7) is inserted into said cavity by means of a mandrel (9) which is urged into said cavity (1) and connected to the walls (3) of said cavity (1) by pressure created by a vacuum source placed in communication with said walls (3) through holes and/or slots provided in said walls (3) and at least partially by blades and/or vanes (10) radially movable out from said mandrel (9) thereby stretching and plastically deforming said sheet (7) under attenuation and surface magnification,
and that the central portion of said sheet (7) is displaced up and brought into contact with the inside of said cap (5) by said mandrel (9) and by vacuum.

2. Method as claimed in claim 1,
**characterized in that**
a conical bandolier (6) is placed at a suitable location against the wall (3) of said cavity (1) before said sheet (7) is deformed in said cavity.

3. Method as claimed in claim 1 or 2,
**characterized in that**
said sheet (7) is heated to plasticity whereafter it is urged into said cavity (1) by said mandrel (9).

4. Method as claimed in any of the preceding claims,
**characterized in that**
a source of compressed air is connected to the portion of the cavity (1) in which said mandrel (9) is located.

5. Method as claimed in any of the preceding claims,
**characterized in that**
the front portion (11) of said mandrel (9) presses a portion of said sheet (7) against a projected sharp edge in the form of a ring on the inside of a circular plate of said cap (5) surrounded by an annular cylindrical portion whose inside is provided with screw threads so that said sharp edge at least partially penetrates into said sheet (7) being plastified.

6. Method as claimed in one of the preceding claims,
**characterized in that**
a cap (5) comprising holes and/or slots is inserted into said cavity (1).

7. Hollow bodies (4) produced according to the method as claimed in one of the preceding claims,
**characterized in that**
they are telescopically stacked or nested in one another due to their progressively reducing cross-section.

8. Packaging container filled with content and produced from a hollow body (4) as claimed in claim 7,
**characterized in that**
after filling said content it is provided with a bottom (12) of plastic material which is sealed against the opening zone of said hollow body (4) by heat and pressure.

## Patentansprüche

1. Verfahren zum Herstellen von flaschenartigen oder schlauchartigen, mit einer Kappe versehenen Verpackungsbehältern (13) aus einem im erwärmten Zustand formbaren Polymermaterial,
bei dem eine vorgefertigte Kappe (5) in einer konischen Form oder einem Formhohlraum (1) angeordnet wird, und
wobei eine Polymerbahn (7) in dem Hohlraum (1) an den Seitenwänden (3) verformt und an der Innenseite der Kappe (5) zur Bildung eines Hohlraums (4) fixiert wird,
**dadurch gekennzeichnet, daß**
die Bahn (7) über der Öffnung (2) des Hohlraums (1) aufgebracht und durch Klemmeinrichtungen (8) fest um die Öffnung (2) gehalten wird, wobei der Hohlraum (1) von seiner Öffnung (2) zu seinem innersten Bereich einen fortschreitend abnehmenden Querschnitt aufweist,
woraufhin die Bahn (7) mittels eines Dorns (9) in den Hohlraum eingebracht wird, der durch von einer Vakuumquelle, die durch in den Wänden (3) vorgesehenen Löcher und/oder Schlitze in Verbindung mit den Wänden (3) angeordnet ist, erzeugten Druck sowie wenigstens teilweise durch Blätter und/oder Flügel (10) in den Hohlraum (1) gedrückt und mit den Wänden (3) des Hohlraums (1) verbunden wird, die radial aus dem Dorn (9) bewegt werden können, wodurch die Bahn (7) unter Schwächung und Flächenvergrößerung gedehnt und plastisch verformt wird,
und daß der zentrale Abschnitt (7) der Bahn durch den Dorn (9) und durch Vakuum nach oben verschoben und mit der Innenseite der Kappe (5) in Kontakt gebracht wird.

2. Verfahren nach Anspruch 1,
**dadurch gekennzeichnet, daß**
ein konisches Band (6) an einer geeigneten Stelle gegen die Wand (3) des Hohlraums (1) angeordnet wird, ehe die Bahn (7) in dem Hohlraum verformt wird.

3. Verfahren nach Anspruch 1 oder 2,
**dadurch gekennzeichnet, daß**
die Bahn (7) auf Plastizität erwärmt wird, woraufhin sie durch den Dorn (9) in den Hohlraum (1) gedrückt wird.

4. Verfahren nach einem der vorhergehenden Ansprüche,
**dadurch gekennzeichnet, daß**
eine Druckluftquelle mit dem Abschnitt des Hohlraums (1) verbunden ist, in dem der Dorn (9) angeordnet ist.

5. Verfahren nach einem der vorhergehenden Ansprüche,
**dadurch gekennzeichnet, daß**
der vordere Abschnitt (11) des Dorns (9) einen Teil der Bahn (7) gegen eine vorstehende scharfe Kante in Form eines Rings an der Innenseite einer kreisförmigen Platte der Kappe (5) preßt, die von einem ringförmigen zylindrischen Abschnitt umgeben ist, dessen Innenseite derart mit Schraubgewinden versehen ist, daß die scharfe Kante wenigstens teilweise in die plastifizierte Bahn (7) eindringt.

6. Verfahren nach einem der vorhergehenden Ansprüche,
**dadurch gekennzeichnet, daß**
eine Kappe (5) mit Löchern und/oder Schlitzen in den Hohlraum (1) eingeführt wird.

7. Hohlkörper (4), die nach dem Verfahren nach einem der vorhergehenden Ansprüche hergestellt sind,
**dadurch gekennzeichnet, daß**
sie aufgrund ihres fortschreitend abnehmenden Querschnitts teleskopartig ineinandergestapelt oder -gesetzt sind.

8. Packungsbehälter, der mit Inhalt gefüllt und aus einem Hohlkörper (4) nach Anspruch 7 hergestellt ist,
**dadurch gekennzeichnet, daß**
er nach dem Einfüllen des Inhalts mit einem Boden (12) aus Kunststoffmaterial versehen wird, der durch Wärme und Druck gegen die Öffnungszone des Hohlkörpers (4) versiegelt wird.

## Revendications

1. Procédé de fabrication de récipients d'emballage bouchés (13), en forme de bouteille ou de tube, à partir d'une matière polymère formable à l'état chauffé, dans lequel un bouchon préfabriqué (5) est placé dans un moule ou une cavité de formage conique (1), et dans lequel une feuille de polymère (7) est déformée dans ladite cavité (1), sur les parois latérales (3) de celle-ci, et elle est fixée contre l'intérieur dudit bouchon (5), de manière à former un corps creux (4),
caractérisé en ce que :
ladite feuille (7) est appliquée sur l'ouverture (2) de la cavité (1) et elle est retenue de façon fixe autour de ladite ouverture (2) par des dispositifs de blocage (8), ladite cavité (1) ayant une section transversale progressivement réduite de son ouverture (2) vers sa région la plus intérieure,
on insère ladite feuille (7) ensuite dans ladite cavité au moyen d'un mandrin (9) qui est pressé dans ladite cavité (1), la feuille étant appliquée aux parois (3) de la dite cavité (1) par la pression engendrée par une source de vide mise en communication avec lesdites parois (3) par l'intermédiaire de trous et/ou de fentes prévus dans lesdites parois (3) et au moins partiellement par des lames et/ou des ailettes (10) déplaçables radialement vers l'extérieur à partir dudit mandrin (9) de façon à étirer et à déformer plastiquement ladite feuille (7) par amincissement et agrandissement de la surface , et
la partie centrale de ladite feuille (7) est déplacée et mise en contact avec l'intérieur dudit bouchon (5) par ledit mandrin (9) et par le vide.

2. Procédé suivant la revendication 1,
caractérisé en ce que :
on place une ceinture conique (6) à un endroit approprié contre la paroi (3) de ladite cavité (1) avant de déformer ladite feuille (7) dans ladite cavité.

3. Procédé suivant la revendication 1 ou 2,
caractérisé en ce que :
on chauffe ladite feuille (7) à l'état plastique, après quoi on la presse dans ladite cavité (1) au moyen dudit mandrin (9).

4. Procédé suivant une quelconque des revendications précédentes,
caractérisé en ce que :
une source d'air comprimé est connectée à la partie de la cavité (1) dans laquelle est placé ledit mandrin (9).

5. Procédé suivant une quelconque des revendications précédentes,
caractérisé en ce que :
la partie avant (11) dudit mandrin (9) presse une partie de ladite feuille (7) contre un bord vif en saillie sous la forme d'un anneau,du côté intérieur d'une plaque circulaire dudit bouchon (5) entourée par une partie cylindrique annulaire dont l'intérieur présente un filetage, de sorte que ledit bord vif pénètre au moins partiellement dans ladite feuille (7) à l'état plastifié.

6. Procédé suivant une quelconque des revendications précédentes,
caractérisé en ce que :
on insère un bouchon (5) comportant des trous et/ou des fentes dans ladite cavité (1).

7. Corps creux (4) fabriqués par le procédé suivant une des revendications précédentes,
caractérisés en ce que :
on peut les empiler ou les emboîter télescopiquement les uns dans les autres du fait de leur section transversale progressivement réduite.

8. Récipient d'emballage rempli avec un contenu et fabriqué à partir d'un corps creux (4) suivant la revendication 7,
caractérisé en ce que :
après remplissage avec ledit contenu, le récipient est pourvu d'un fond (12) en matière plastique qui est soudé contre la zone d'ouverture dudit corps creux (4) par application de chaleur et de pression.
